# EUROPÄISCHE PATENTSCHRIFT

(11) **EP 3 784 911 B1**
(45) Veröffentlichungstag und Bekanntmachung des Hinweises auf die Patenterteilung: **10.08.2022**
(21) Anmeldenummer: 19732303.3
(22) Anmeldetag: 14.06.2019
(51) Int. Cl.: F15B 1/24

(54) **HYDROSPEICHER**
HYDRAULIC ACCUMULATOR
ACCUMULATEUR HYDRAULIQUE

(30) Priorität: 29.06.2018 DE 102018005204
(43) Veröffentlichungstag der Anmeldung: 03.03.2021
(73) Patentinhaber: Hydac Technology GmbH, 66280 Sulzbach (DE)
(72) Erfinder: BAUER, Frank, 66646 Marpingen (DE); KLOFT, Peter, 56235 Ransbach-Baumbach (DE)
(74) Vertreter: Bartels und Partner, Patentanwälte
(86) Internationale Anmeldenummer: PCT/EP2019/065672
(87) Internationale Veröffentlichungsnummer: WO 2020/002004

(56) Entgegenhaltungen:
- WO-A2-2009/091621
- CH-A- 510 842
- FR-A1- 2 529 290

## Beschreibung

Die Erfindung betrifft einen Hydrospeicher, insbesondere in Form eines Kolbenspeichers, mit den Merkmalen im Oberbegriff von Anspruch 1.

Dahingehende Speicher, die auch als Gasdruckspeicher bezeichnet werden, werden je nach eingesetztem Trennelement zum Separieren einer Gasseite von einer Flüssigkeitsseite im Speichergehäuse als Kolbenspeicher, Blasenspeicher, Membranspeicher und Balgspeicher bezeichnet. Die genannten Hydrospeicher weisen, zumindest vor ihrem Anschluss an den jeweiligen Fluidkreislauf, auf der Gasseite einen vorgebbaren Druck-Sollwert auf, den man auch als die Gasvorspannung des Speichers bezeichnet.

Kommt es zu einem Versagen des Trennelements, tritt Flüssigkeit von der Flüssigkeitsseite auf die Gasseite des Speichers über, was zu einem Verlust der Gasvorspannung führt und den Hydrospeicher regelmäßig unbrauchbar werden lässt.

Um diesen Versagensfall zu detektieren, ist in der DE 42 27 657 A1 eine Vorrichtung zur Überprüfung einer vorgebbaren Sollposition eines innerhalb des Speichergehäuses verfahrbaren Kolbens als Trennelement vorgeschlagen worden, der auf einer Seite des Trennelements mit Gas befüllt und auf seiner anderen Seite an einen Fluidkreislauf anschließbar ist, wobei die Sollposition in Verbindung mit der vorgebbaren Gasvorspannung steht. Bei der bekannten Lösung weist der Trennkolben einen Prüfkörper auf, dem eine sichtbare, die Sollposition des Trennelements kennzeichnende Markierung auf der Außenseite des Speichergehäuses zugeordnet ist, auf die bezogen eine für den jeweiligen Prüfkörper vorgesehene Ultraschall-Prüfeinrichtung auf den Speicher aufsetzbar ist. Weicht im späteren Betrieb und bei erneuter Überprüfung mittels der Ultraschall-Prüfeinrichtung die aktuelle Position von der Sollposition des Trennkolbens ab, die einer vorgebbaren Gasvorspannung entspricht, gibt dies einen Hinweis, dass der Hydrospeicher nicht mehr ordnungsgemäß arbeitet.

Eine weitere Überwachungseinrichtung für Hydrospeicher ist durch die DE 10 2014 001 283 A1 bekannt. Während bei dem vorstehend genannten Stand der Technik eine Überprüfung der Betriebssituation des Hydrospeichers nur unter Zwischenschalten eines Prüfgerätes mit entsprechender Sensorik möglich ist, sieht die vorliegende Überwachungseinrichtung für die Überprüfung eine am Speicher angeordnete, optisch erkennbare Anzeige vor. Hierfür ist an der Wand des Gehäuses als Teil der Überwachungseinrichtung ein Sichtfenster angeordnet, durch das ein Indikator beobachtbar ist, der mit dem Gasraum medienführend in Verbindung steht und dessen optische Eigenschaften sich bei Benetzung mit Flüssigkeit erkennbar ändern, was regelmäßig dann der Fall ist, wenn ungewollt durch Versagen des Trennelements ein Flüssigkeitsübertritt zur Gasseite erfolgt. Durch Beobachten des Indikators über ein druckdicht abgeschlossenes Sichtfenster, unmittelbar am Speichergehäuse angebracht, lässt sich die Funktionsüberwachung bei laufendem Betrieb besonders einfach und in sicherer Weise von außen durchführen.

Beiden Überwachungseinrichtungen ist gemein, dass sich als einziger Versagensfall nur der Übertritt von Flüssigkeit von der Flüssigkeitsseite des Speichers bei entsprechendem Versagen des Trennelements auf die Gasseite des Speichers feststellen lässt. Andere Schadensfälle oder eine sonstige Zustandsbeobachtung am Hydrospeicher lassen sich dergestalt aber nicht vornehmen.

Die CH 510 842 A beschreibt einen Hydrospeicher mit einem Speichergehäuse und einem darin angeordneten Trennelement, das eine Fluid- von einer Gasseite trennt, wobei zumindest die Gasseite, zumindest teilweise, mittels mindestens eines Schauglases inspizierbar ist, das im Speichergehäuse festgelegt ist.

Weitere Hydrospeicher gehen aus der FR 2 529 290 A1 und der WO 2009/ 091621 A2 hervor.

Ausgehend von diesem Stand der Technik liegt der Erfindung daher die Aufgabe zugrunde, die bekannten Lösungen dahingehend weiter zu verbessern, dass auch im Hinblick auf andere mögliche Fehlerquellen eine Zustandsüberwachung des Speichers möglich ist.

Eine dahingehende Aufgabe löst ein Hydrospeicher mit den Merkmalen des Patentanspruchs 1 in seiner Gesamtheit.

Erfindungsgemäß ist hierfür vorgesehen, dass zwei Schaugläser im Speichergehäuse festgelegt sind, von denen ein Schauglas der Zufuhr von Licht, vorzugsweise von einer Fremd-Lichtquelle stammend, und das andere Schauglas der optischen Beobachtung dient.

Durch diese Schauglasanordnung ist eine Beleuchtung des ansonsten unbeleuchteten Innenraums des Hydrospeichers realisiert, was die Beobachtung von Bauteilen sowie deren Bewegung und Zusammenwirken im Innenraum des Hydrospeichers erleichtert. Bei Einsatz von zwei Schaugläsern können diese auch unterschiedliche Glasdurchmesser aufweisen, beispielsweise ein kleines Schauglas für die Lichtzufuhr und ein größeres für die menschliche Beobachtung.

Ferner ist vorgesehen, dass zumindest die Gasseite des Hydrospeichers, zumindest teilweise, mittels der zwei Schaugläser inspizierbar ist, die im Speichergehäuse festgelegt sind.

Die dahingehend erfindungsgemäße Lösung kommt ohne Einsatz von kompliziert aufbauenden Prüfeinrichtungen aus und benötigt auch keine Indikatorsubstanz, die regelmäßig als chemischer Indikator ausgebildet bei lang andauerndem Betrieb des Hydrospeichers sein Ansprechverhalten verändert oder gegebenenfalls ganz verliert. Demgegenüber ist mit der erfindungsgemäßen Lösung eine permanente Sichtbeobachtung auf das Innere des Speichergehäuses zumindest auf seiner Gasseite verwirklicht.

Da das Arbeitsgas eines Hydrospeichers regelmäßig aus Stickstoffgas gebildet ist, das sich durchsichtig darstellt, ist die Beobachtung auf die Innenseite des Speichergehäuses und in den Gasraum hinein in keiner Weise erschwert. Vielmehr ist die Gasseite des Hydrospeichers der optischen Beobachtung frei zugänglich. Dies vorausgesetzt kann nicht nur, wie bei den bekannten Lösungen, der ungewollte Flüssigkeitsübertritt über das Trennelement auf die Gasseite des Speichers zwanglos beobachtet werden, sondern eine weitere Vielzahl von möglicherweise auftretenden Fehlern, wie die Rostbildung, das Abplatzen von Beschichtungen, die ab- oder ausgebrochenen Teile von Speichergehäuse und jeweiligem Trennelement einschließlich der abgelösten Dichtungs- und Führungsteile, mit denen beispielsweise ein Trennkolben bei seiner Längsbewegung entlang der Innenwand des Speichergehäuses geführt ist. Insbesondere, wenn Kolbenspeicher als Pulsationsdämpfer zwecks Glätten von Druckschwankungen auf der Flüssigkeitsseite arbeiten, kommt es häufig zu Ratter- oder Rillspuren an der Innenwand des Speichergehäuses, die eine Aussage über die verbleibende Lebensdauer des Kolbenspeichers ermöglichen.

Unabhängig von dem Feststellen solcher Fehler und Fehlstellen lässt sich mittels der Schaugläser auch optisch etwas über den Zustand des Hydrospeichers aussagen, beispielsweise indem man sich im Betrieb die Funktion des Trennelements ansieht, ob dieses funktionsgerecht und mithin einwandfrei arbeitet. Bei Einsatz von elastomerem Material für das jeweilige Trennelement (Membran oder Blase) lässt sich über dessen Qualität, beispielsweise im Hinblick auf die Porosität des Trennelements, eine Verlässlichkeitsaussage treffen.

Auch wenn die optische Zustandsüberwachung auf der Gasseite des Hydrospeichers stattfindet, könnte auch eine Überwachung auf der Flüssigkeitsseite zusätzlich erfolgen, auch wenn dort die eingebrachte Flüssigkeitsmenge die optische Beobachtung von außen entsprechend beeinträchtigt. Dergestalt ließen sich beispielsweise ungewollt von der Gas- auf die Flüssigkeitsseite übergetretene Gasmengen regelmäßig in Form von Blasen noch optisch detektieren.

Bei Einsatz einer entsprechenden Sensorik lässt sich die Überwachung auch ohne Einsatz von Wartungs- und Bedienpersonal am Speicher selbst durchführen, wozu auch der Einsatz der Kameratechnologie gehört.

Je nach Einbaulage des Hydrospeichers kann das jeweilige Schauglas am Deckel, am Boden oder an einer Seitenwand des Speichergehäuses angeordnet sein. Bei einer seitlichen Anordnung im Speichergehäuse ist jedenfalls dafür Sorge zu tragen, dass die in das Speichergehäuse eingesetzten Schaugläser die Bewegung des Trennelements nicht behindern, beispielsweise indem die Schaugläser bündig mit der Innenwand des Speichergehäuses abschließen und dergestalt sind, dass sie von einem Trennkolben auch hemmnisfrei überfahren werden können.

Bei einer bevorzugten Ausführungsform des erfindungsgemäßen Hydrospeichers ist zur Herstellung der Schaugläser ein den Glaswerkstoff umgebender Metallwerkstoff mit diesem gemeinsam auf eine Temperatur erhitzt, bei der der Glaswerkstoff flüssig ist und an den Metallwerkstoff unter Anlage mit demselben anläuft, so dass bei anschließender Abkühlung der Glaswerkstoff unter Bildung eines jeweiligen Schauglases erstarrt und vom Metallwerkstoff ringförmig eingespannt ist. Ein fluiddichter Einbau der Schaugläser in das Speichergehäuse ist dadurch erreicht, dass eine materialschlüssige Verbindung zwischen dem Glaswerkstoff der Schaugläser und dem Metallwerkstoff des Speichergehäuses oder eines separaten Metallringes ausgebildet ist.

Hieraus ergibt sich der Vorteil, dass an den in eine Gehäuseöffnung des Hydrospeichers eingesetzten Schaugläsern kein Fluid, wie Gas, in unerwünschter Weise in die Umgebung des Speichergehäuses gelangen kann. Anstelle eines ringförmigen Querschnitts ist jede andere Außenkontur der Schaugläser und der zugehörigen Gehäuseöffnung denkbar, beispielsweise viereckig, dreieckig, sternförmig, oval oder einer beliebigen Freiform folgend.

Ein separates Metallteil zwischen dem jeweiligen Schauglas und der zugehörigen Gehäuseöffnung kann dazu eingesetzt werden, die Außenkontur der Schaugläser unabhängig von der Innenkontur der Gehäuseöffnung auszubilden, um beispielsweise ein kreisförmiges Schauglas in einer rechteckförmigen Gehäuseöffnung oder umgekehrt festzulegen.

Mit einem Metall verschmolzene Schaugläser bestehen im Wesentlichen aus einer Sichtscheibe, die in einen Metallring eingeschmolzen ist. Durch die mechanische Vorspannung verhält sich ein derart metallverschmolzenes Schauglas wie ein zäher Werkstoff und weist gegenüber einem thermisch vorgespannten Schauglas eine erhöhte Sicherheit auf. Zur Sichtkontrolle von Vorgängen, die im Hydrospeicher als ein abgeschlossener Raum stattfinden, weisen die metallverschmolzenen Schaugläser J Z die erforderliche Beständigkeit gegenüber Druck-, Temperatur- und Medienbelastungen sowie die erforderliche Transparenz zur Durchsicht auf.

Bei einer weiteren bevorzugten Ausführungsform des erfindungsgemäßen Hydrospeichers ist der Metallwerkstoff aus Materialien des Speichergehäuses oder aus einem eigenständigen Metallring, vorzugsweise aus einem korrosionsbeständigen Edelstahl bestehend, gebildet, der in das Speichergehäuse eingesetzt ist. Der Metallring als separates Bauteil ermöglicht die Wahl eines geeigneten Metallwerkstoffes zur Verbindung mit dem Glaswerkstoff der Schaugläser sowie eine separate Herstellung der metallverschmolzenen Schaugläser, welche anschließend in das Speichergehäuse eingesetzt werden.

Hierbei kann der Einbau bündig abschließend mit der Speicheraußenwand oder mit einem Überstand gegenüber der Speicheraußenwand, vergleichbar einem aufgesetzten Rahmen, erfolgen. Ein über die Speicheraußenwand nach außen überstehender Rahmen dient einem Schutz der Schaugläser, insbesondere vor von der Seite aufgebrachten Schmutzpartikeln nebst einer zugehörigen Beeinträchtigung der Sichtkontrolle. Der Vorteil eines bündig abschließenden Einbaus der Schaugläser in die Speicheraußenwand liegt in einer glatten, überstandsfreien Außenwand des Hydrospeichers, die optisch ansprechend und leicht zu reinigen ist.

Weiter ist vorteilhaft, dass das jeweilige Schauglas ein Verbund-Sicherheitsglas, ein Natron-Kalkglas, ein Borosilikatglas, eine Glaskeramik, oder ein Quarz- oder Saphirglas ist. Diese Auswahl ermöglicht, für die jeweilige Anwendung das geeignete Schauglas hinsichtlich Druckbeständigkeit, Temperaturbeständigkeit, Durchsichtigkeit sowie Materialbeständigkeit gegenüber den in den Hydrospeicher aufgenommenen Flüssigkeiten und Gasen zu wählen. Neben dem gewählten Glaswerkstoff sind die Größe der Gehäuseöffnung für die Schaugläser sowie die Dicke der Glasscheibe für die Qualität der Sichtprüfung und die Lebensdauer der Schaugläser entscheidend.

Bei einer bevorzugten Ausführungsform der Erfindung sind die Schaugläser an ihren freiliegenden Stirnseiten geschliffen und vorzugsweise poliert. Hierdurch sind etwaige Einschränkungen bei einer Sichtprüfung durch die Schaugläser hindurch wirksam vermieden. Störende Kratzer und Unebenheiten sind eliminiert und eine optisch ansprechende und im Bedarfsfall leicht zu reinigende Oberfläche ist an der Stirnseite der Schaugläser ausgebildet.

Durch die Schaugläser ist eine wartungsfreie, optische Prüfeinrichtung zur Überwachung der Vorgänge in einem Hydrospeicher, beispielsweise zur Überwachung der Bewegung eines Kolbens, in konstruktiv einfacher und kostengünstiger Weise bereitgestellt.

Bei einer bevorzugten Ausführungsform des erfindungsgemäßen Hydrospeichers sind die Schaugläser mit optischen Eigenschaften versehen, wie mit einer Vergrößerung, einer Vergütung und/oder prismatischen Eigenschaften. Die optischen Eigenschaften der Schaugläser sind bedarfsoptimiert eingestellt, um die Sichtprüfung des Speichergehäuses mit dem darin angeordneten Trennelement zu erleichtern. So werden beispielsweise durch eine entsprechende Beschichtung Kontraste zwischen einzelnen Bauteilen verstärkt, Ansichten von Bauteilen vergrößert und/oder verzerrt sowie störende Spiegelreflexe an den Schaugläsern durch eine Vergütung verhindert. Die Linse kann als sogenanntes Fischauge ausgebildet sein und dementsprechende Verzerrungen beim Blick durch die Schaugläser hindurch ins Innere des Speichergehäuses erzeugen. Eine Vergütung ist eine Antireflexbeschichtung, um die Reflexion von optischen Oberflächen von Linsen, Objektiven, Prismen oder Platten zu unterdrücken und die Transmission zu erhöhen. Zusammengefasst ist eine zuverlässige Sichtprüfung mit erhöhter Qualität durch die erfindungsgemäß ausgestalteten Schaugläser hindurch ermöglicht.

Bei einer weiteren bevorzugten Ausführungsform des erfindungsgemäßen Hydrospeichers weisen die das jeweilige Schauglas umfassenden Metallringe jeweils ein Außengewinde auf, mit dem sie jeweils über ein Innengewinde des Speichergehäuses an diesem festgelegt sind. Das mit dem Innengewinde zusammenwirkende Außengewinde ermöglicht einen sicheren Einbau und eine lagestabile Anordnung der Schaugläser in der zugehörigen Gehäuseöffnung des Speichergehäuses.

Weiter ist vorteilhaft, dass beide Schaugläser in Nebeneinanderanordnung und mit ihren Längsachsen parallel zu einer Längsachse des Speichergehäuses verlaufend an diesem festgelegt sind. Diese Schauglasanordnung ermöglicht eine Sicht in den Innenraum des Hydrospeichers vergleichbar einem Fernglas, bei welchem jedem Auge des Beobachters ein separates Glas zugeordnet ist.

Als Ort der Anbringung der beiden Schaugläser dient vorzugsweise ein stirnseitig angeordneter Abschlussdeckel als Teil des Speichergehäuses. Der Abschlussdeckel ist in der Regel abgesehen von einem Einfüllstutzen frei von weiteren Anbauten gehalten. Somit ergibt sich eine gute Zugänglichkeit für einen Beobachter, der zur Sichtprüfung seine Augen nahe an die beiden Schaugläser heranführen kann. Vorteilhafterweise ist der Abschlussdeckel vom Speichergehäuse abnehmbar, was eine etwaige Reparatur und eine allfällige Wartung der Schaugläser mit vergleichsweise geringem Aufwand ermöglicht.

Der Hydrospeicher ist je nach Ausgestaltung seines Trennelementes insbesondere als Kolben-, Balg-, Blasen- oder Membranspeicher ausgebildet. Durch die beiden Schaugläser ist ein Inspektionsfenster zur Überwachung des Innenraums des Speichergehäuses realisiert.

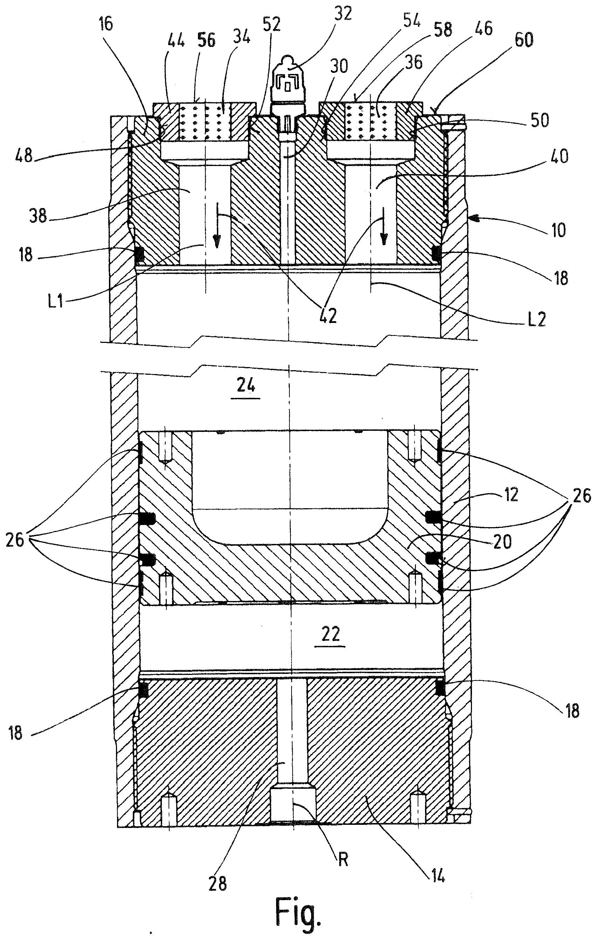

Weitere Vorteile und Merkmale der Erfindung ergeben sich aus der Figur und der nachfolgenden Beschreibung der Zeichnung. Die vorstehend genannten und die weiter angeführten Merkmale können erfindungsgemäß jeweils einzeln oder in beliebigen Kombinationen an einem Hydrospeicher realisiert sein. Die in der Figur gezeigten Merkmale sind rein schematisch und nicht maßstäblich zu verstehen.

Es zeigt die einzige Figur im Längsschnitt einen erfindungsgemäßen Hydrospeicher mit einem darin angeordneten Trennelement und zwei an einem oberen Abschlussdeckel stirnseitig angeordnete Schaugläser.

Die einzige Figur zeigt im Längsschnitt einen Hydrospeicher mit einem Speichergehäuse 10, das einen hohlzylinderförmigen Hauptteil 12 mit einem Bodenteil 14 an der Unterseite und einem Abschlussdeckel 16 an der Oberseite aufweist. Das Bodenteil 14 und der Abschlussdeckel 16 sind von der jeweiligen Stirnseite aus in das Hauptteil 12 des Speichergehäuses 10 eingesetzt und gegenüber diesem mit Dichtelementen 18 fluiddicht abgedichtet. Im Speichergehäuse 10 ist ein Trennelement 20 linearverfahrbar angeordnet. Das Trennelement 20 hat die Form eines topfförmigen Kolbens, der eine dem Bodenteil 14 zugeordnete Flüssigkeits- oder Ölseite 22 von einer dem Abschlussdeckel 16 zugeordneten Gasseite 24 trennt. Weiter weist das Trennelement 20 eine topfförmige, zur Gasseite 24 hin gerichtete Öffnung auf. Das Speichergehäuse 10 mit dem darin angeordneten Trennelement 20 ist rotationssymmetrisch zur Längsachse R des Hydrospeichers ausgebildet, die in der Darstellung der Figur vertikal ausgerichtet ist. Aufgrund der großen Erstreckung des Hydrospeichers in Richtung der Längsachse R ist dieser in der Figur mit einer Unterbrechung dargestellt.

Um ein Verfahren des Trennelements 20 im Innenraum des Speichergehäuses 10 zu erleichtern, sind an der radialen Außenseite des Trennelements 20 Gleitführungen nebst Dichtringen 26 ausgebildet. Koaxial zur Längsachse R sind im Bodenteil 14 ein Fluidanschluss 28 und im Abschlussdeckel 16 ein Gasanschluss 30 ausgebildet. In der gezeigten Funktionsstellung des Hydrospeichers ist der Fluidanschluss 28 zur Verbindung mit einer nicht dargestellten Fluidleitung geöffnet, um Fluid der Fluidseite 22 zuzuführen oder von dieser abzuführen. Der Gasanschluss 30 ist nach Befüllung der Gasseite 24 mit einem vorgegebenen Druck mit einem Stopfen 32 verschlossen.

Um den Innenraum des Speichergehäuses 10 auf der Gasseite 24 zu inspizieren, sind ein erstes Schauglas 34 und ein zweites Schauglas 36 in einer ersten Durchgangsbohrung 38 und in einer zweiten Durchgangsbohrung 40 im Abschlussdeckel 16 angeordnet. Wie mit Pfeilen 42 verdeutlicht, ist durch die beiden Schaugläser 34, 36 hindurch ein Blick auf die Gasseite 24 des Hydrospeichers und eine Überwachung der Position des Trennelements 20 im Speichergehäuse 10 ermöglicht. Die Schaugläser 34, 36 sind jeweils unter Bildung eines Sichtglases in einen ersten Metallring 44 und einen zweiten Metallring 46 materialschlüssig eingebracht. Zur Herstellung dieser metallverschmolzenen Schaugläser 34, 36 ist ein den Glaswerkstoff umgebender Metallwerkstoff mit diesen gemeinsam auf eine Temperatur erhitzt, bei der der Glaswerkstoff flüssig ist und einen Metallwerkstoff unter Anlage mit demselben anläuft, so dass bei anschließender Abkühlung der Glaswerkstoff unter Bildung eines jeweiligen Sichtglases erstarrt und vom Metallwerkstoff, hier den Metallringen 44, 46, ringförmig eingespannt ist.

Die das jeweilige Schauglas 34, 36 umfassenden Metallringe 44, 46 bestehen vorzugsweise aus einem korrosionsbeständigen Edelstahl und weisen jeweils ein Außengewinde 48, 50 auf, mit dem sie jeweils mit einem Innengewinde 52, 54 am äußeren Ende der jeweiligen Durchgangsbohrung 38, 40 verschraubt und auf diese Weise am Speichergehäuse 10 festgelegt sind. Die beiden Schaugläser 34, 36 sind an ihren freiliegenden Stirnseiten 56, 58 geschliffen und vorzugsweise poliert und schließen mit dem zugehörigen Metallring 44, 46 bündig ab. Als Glaswerkstoff für das jeweilige Schauglas 34, 36 ist vorzugsweise ein Verbund-Sicherheitsglas, ein Natron-Kalkglas, ein Borosilikatglas, eine Glaskeramik oder ein Quarz- oder Saphirglas gewählt. Zweckmäßigerweise sind beide Schaugläser 34, 36 aus dem gleichen Werkstoff gebildet, es ist jedoch auch vorstellbar, hier unterschiedliche Glaswerkstoffe zu wählen. Zur Verbesserung der Durchsicht durch die Schaugläser 34, 36 sowie der durch diese erzeugten optischen Effekte können diese mit optischen Eigenschaften versehen sein, beispielsweise mit einer Vergrößerung, einer Vergütung, und/oder prismatischen Eigenschaften.

Im gezeigten Ausführungsbeispiel sind zwei Schaugläser 34, 36 im Speichergehäuse 10 festgelegt, es ist jedoch auch denkbar, mehr als zwei Schaugläser 34, 36 vorzusehen, welche auch im Hauptteil 12 und im Bodenteil 14 angeordnet sein können. Als Ort der Anbringung der beiden Schaugläser 34, 36 dient in dem gezeigten Ausführungsbeispiel der stirnseitig angeordnete Abschlussdeckel 16 als Teil des Speichergehäuses 10. Die beiden Schaugläser 34, 36 ragen in axialer Richtung mit geringem Überstand über eine Deckelstirnseite 60 des Abschlussdeckels 16 vor. Die beiden Schaugläser 34, 36 sind in Nebeneinanderanordnung und mit ihren Längsachsen L1, L2 parallel zur Längsachse R des Speichergehäuses 10 verlaufend an diesem festgelegt. Vorteilhafterweise dient ein Schauglas 34 der Zufuhr von Licht, vorzugsweise von einer in der Figur nicht dargestellten Fremd-Lichtquelle stammend, und das andere Schauglas 36 zeitgleich der optischen Beobachtung.

Die erfindungsgemäße Lösung ermöglicht eine Beobachtung der Gasseite 24 in einem Speichergehäuse 10 eines Hydrospeichers sowie des darin angeordneten Trennelements 20 und weiteren Komponenten über zwei Schaugläser 34, 36 in konstruktiv einfacher, zuverlässiger und kostengünstiger Weise. Sofern das jeweilige Schauglas 34, 36 in der Art einer Insertlösung in einem Schraubeinsatz integriert ist, lassen sich solche Schraubeinsätze in standardisierter Bauweise in großer Stückzahl herstellen, und in der Art eines Nachrüstsatzes ausgeliefert in bereits bestehende, in Betrieb befindliche Hydrospeicher einsetzen. Als Insertaufnahme dient dabei vorzugsweise der Metallring 44, 46, der mit einem entsprechenden Außengewinde versehen ist.

## Patentansprüche

1. Hydrospeicher, insbesondere in Form eines Kolbenspeichers, mit einem Speichergehäuse (10) und einem darin angeordneten Trennelement (20), insbesondere in Form eines Kolbens, das eine Fluid- (22) von einer Gasseite (24) trennt, wobei zumindest die Gasseite (24), zumindest teilweise, mittels mindestens eines Schauglases (34, 36) inspizierbar ist, das im Speichergehäuse (10) festgelegt ist, **dadurch gekennzeichnet, dass** zwei Schaugläser (34, 36) im Speichergehäuse (10) festgelegt sind, von denen ein Schauglas (34, 36) der Zufuhr von Licht, vorzugsweise von einer Fremd-Lichtquelle stammend, und das andere Schauglas (34, 36) der optischen Beobachtung dient.

2. Hydrospeicher nach Anspruch 1, **dadurch gekennzeichnet, dass** zur Herstellung der Schaugläser (34, 36) ein den Glaswerkstoff umgebender Metallwerkstoff mit diesem gemeinsam auf eine Temperatur erhitzt ist, bei der der Glaswerkstoff flüssig ist und an den Metallwerkstoff unter Anlage mit demselben anläuft, so dass bei anschließender Abkühlung der Glaswerkstoff unter Bildung eines jeweiligen Schauglases erstarrt und vom Metallwerkstoff ringförmig eingespannt ist.

3. Hydrospeicher nach Anspruch 2, **dadurch gekennzeichnet, dass** der Metallwerkstoff aus Materialien des Speichergehäuses (10) oder aus einem eigenständigen Metallring (44, 46), vorzugsweise aus einem korrosionsbeständigen Edelstahl bestehend, gebildet ist, der in das Speichergehäuse (10) eingesetzt ist.

4. Hydrospeicher nach einem der vorstehenden Ansprüche, **dadurch gekennzeichnet, dass** das jeweilige Schauglas (34, 36)
- ein Verbund-Sicherheitsglas;
- ein Natron-Kalkglas;
- ein Borosilikatglas;
- eine Glaskeramik; oder
- ein Quarz- oder Saphirglas
ist.

5. Hydrospeicher nach einem der vorstehenden Ansprüche, **dadurch gekennzeichnet, dass** die Schaugläser (34, 36) an ihren freiliegenden Stirnseiten (56, 58) geschliffen und vorzugsweise poliert sind.

6. Hydrospeicher nach einem der vorstehenden Ansprüche, **dadurch gekennzeichnet, dass** die Schaugläser (34, 36) mit optischen Eigenschaften versehen sind, wie mit
- einer Vergrößerung;
- einer Vergütung; und/oder
- prismatischen Eigenschaften.

7. Hydrospeicher nach Anspruch 3, **dadurch gekennzeichnet, dass** die das jeweilige Schauglas (34, 36) umfassenden Metallringe (44, 46) jeweils ein Außengewinde (48, 50) aufweisen, mit dem sie jeweils über ein Innengewinde (52, 54) des Speichergehäuses (10) an diesem festgelegt sind.

8. Hydrospeicher nach einem der vorstehenden Ansprüche, **dadurch gekennzeichnet, dass** beide Schaugläser (34, 36) in Nebeneinanderanordnung und mit ihren Längsachsen (L1, L2) parallel zu einer Längsachse (R) des Speichergehäuses (10) verlaufend an diesem festgelegt sind.

9. Hydrospeicher nach einem der vorstehenden Ansprüche, **dadurch gekennzeichnet, dass** als Ort der Anbringung der beiden Schaugläser (34, 36) ein stirnseitig angeordneter Abschlussdeckel (16) als Teil des Speichergehäuses (10) dient.

## Claims

1. Hydraulic accumulator, particularly in the form of a piston accumulator, having an accumulator housing (10) and a separating element (20) arranged therein, particularly in the form of a piston, which separates a fluid side (22) from a gas side (24), at least the gas side (24), at least partially, being able to be inspected by at least one sight glass (34, 36), which is fixed in the accumulator housing (10), **characterised in that** two sight glasses (34, 36) are fixed in the accumulator housing (10), one of said sight glasses (34, 36) being used to supply light, preferably from an external light source, and the other sight glass (34, 36) being used for the purpose of optical observation.

2. Hydraulic accumulator according to claim 1, **characterised in that**, to manufacture the sight glasses (34, 36), a metallic material surrounding the glass material is heated together with said glass material to a temperature at which the glass material is liquid and flows onto the metallic material in contact with this material, with the result that the glass material solidifies when subsequently cooled down, forming a respective sight glass and being clamped in an annular manner by the metallic material.

3. Hydraulic accumulator according to claim 2, **characterised in that** the metallic material is formed by materials of the accumulator housing (10) or by an independent metal ring (44, 46), preferably consisting of a corrosion-resistant stainless steel, which is inserted in the accumulator housing (10).

4. Hydraulic accumulator according to any one of the preceding claims, **characterised in that** the respective sight glass (34, 36) is a
- laminated safety glass;
- soda-lime glass;
- borosilicate glass;
- glass ceramic; or
- quartz or sapphire glass

5. Hydraulic accumulator according to any one of the preceding claims, **characterised in that** the sight glasses (34, 36) are ground and preferably polished on their exposed end faces (56, 58).

6. Hydraulic accumulator according to any one of the preceding claims, **characterised in that** the sight glasses (34, 36) are furnished with optical properties such as
- magnification;
- a coating; and/or
- prismatic properties.

7. Hydraulic accumulator according to claim 3, **characterised in that** the metal rings (44, 46) surrounding the respective sight glass (34, 36) each comprise an outer thread (48, 50), with which they are attached to the accumulator housing (10) by means of an inner thread (52, 54) of said housing in each case.

8. Hydraulic accumulator according to any one of the preceding claims, **characterised in that** both sight glasses (34, 36) are fixed on the accumulator housing (10) in a side-by-side arrangement and with their longitudinal axes (L1, L2) running parallel to a longitudinal axis (R) of the accumulator housing.

9. Hydraulic accumulator according to any one of the preceding claims, **characterised in that** an end cap (16) arranged on the end face acts as a location for attaching the two sight glasses (34, 36) as part of the accumulator housing (10).

## Revendications

1. Accumulateur hydraulique, notamment sous la forme d'un accumulateur à piston, comprenant une enveloppe (10) d'accumulateur et un élément (20) de séparation, notamment sous la forme d'un piston, qui y est disposé et qui sépare un côté (22) du fluide d'un côté (24) de gaz, dans lequel au moins le côté (24) de gaz peut, au moins en partie, être inspecté au moins au moyen d'un verre-regard (34, 36) dans l'enveloppe (10) de l'accumulateur, **caractérisé en ce qu'**il est fixé deux verres-regards (34, 36) dans l'enveloppe (10) de l'accumulateur, dont un verre-regard (34, 36) sert à l'arrivée de lumière, provenant de préférence d'une source lumineuse étrangère, et l'autre verre-regard (34, 36) à l'observation optique.

2. Accumulateur hydraulique suivant la revendication 1, **caractérisé en ce que**, pour la fabrication des verre-regards (34, 36), un matériau métallique entourant le matériau de verre est porté conjointement avec celui-ci à une température à laquelle le matériau de verre est liquide et court sur le matériau métallique avec contact avec celui-ci de sorte, qu'au refroidissement venant ensuite, le matériau de verre se solidifie avec formation d'un verre-regard respectif et est encastré annulairement par le matériau métallique.

3. Accumulateur hydraulique suivant la revendication 2, **caractérisé en ce que** le matériau métallique est formé de matériaux de l'enveloppe (10) de l'accumulateur ou d'un anneau (44, 46) métallique indépendant, de préférence en un acier fin résistant à la corrosion, qui est inséré dans l'enveloppe (10) de l'accumulateur.

4. Accumulateur hydraulique suivant l'une des revendications précédentes, **caractérisé en ce que** le verre-regard (34, 36) respectif est
- un verre de sécurité composite ;
- un verre calcaire natron ;
- un verre au borosilicate ;
- une vitrocéramique ; ou
- un verre de quartz ou de saphir.

5. Accumulateur hydraulique suivant l'une des revendications précédentes, **caractérisé en ce que** les verre-regards (34, 36) sont rodés et de préférence polis sur leur côté (56, 58) frontal à découvert.

6. Accumulateur hydraulique suivant l'une des revendications précédentes, **caractérisé en ce que** les verre-regards (34, 36) sont pourvus de propriétés optiques comme
- d'un grossissement ;
- d'un traitement ; et/ou
- de propriétés prismatiques.

7. Accumulateur hydraulique suivant la revendication 3, **caractérisé en ce que** les anneaux (44, 46) métalliques entourant le verre-regard (34, 36) respectif ont chacun un filetage (48, 50) extérieur, par lequel ils sont, respectivement par un taraudage (52, 54) de l'enveloppe (10) de l'accumulateur, fixés à celle-ci.

8. Accumulateur hydraulique suivant l'une des revendications précédentes, **caractérisé en ce que** les deux verre-regards (34, 36) sont fixés l'un à côté de l'autre et en ayant leur axe (L1, L2) longitudinal parallèle à un axe (R) longitudinal de l'enveloppe (10) de l'accumulateur en s'étendant sur celle-ci.

9. Accumulateur hydraulique suivant l'une des revendications précédentes, **caractérisé en ce qu'**un couvercle (16) de fermeture, disposé du côté frontal comme partie de l'enveloppe (10) de l'accumulateur, sert d'emplacement de montage des deux verre-regards (34, 36).
